# FASCICULE DE BREVET EUROPEEN

(11) **EP 0 560 659 B1**
(45) Date de publication et mention de la délivrance du brevet: **11.06.1997**
(21) Numéro de dépôt: 93400579.4
(22) Date de dépôt: 05.03.1993
(51) Int. Cl.: H04B 10/18, H04N 7/22

(54) **Procédé de transmission optique d'un multiplex de porteuses électriques et dispositif pour la mise en oeuvre de ce procédé**
Verfahren und Vorrichtung zur optischen Übertragung eines Multiplexsignals mit elektrischen Trägern
Process and apparatus for the optical transmission of a multiplex of electric carriers

(30) Priorité: 09.03.1992 FR 9202786
(43) Date de publication de la demande: 15.09.1993
(73) Titulaire: FRANCE TELECOM, 75015 Paris (FR)
(72) Inventeur: Pophillat, Lucien, F-22300 Rospez (FR)
(74) Mandataire: Signore, Robert

(56) Documents cités:
- EP-A- 0 078 884
- WO-A-87/04529
- WO-A-91/15927
- PATENT ABSTRACTS OF JAPAN vol. 10, no. 11 (E-374)17 January 1986 & JP-A60 173 938
- IEEE PHOTONICS TECHNOLOGY LETTERS vol. 1, no. 10, 1 October 1989, NEW YORK, NY USA pages 343 - 345 W.I. WAY ET AL. 'Multichannel AM-VSB Television Signal Transmission Using an Erbium-Doped Optical Fiber Power Amplifier'

## Description

### Domaine technique

La présente invention a pour objet un procédé de transmission optique, par modulation de la puissance de la porteuse optique, d'un multiplex ou groupe de porteuses électriques comprenant une plage inoccupée dans la partie basse de son spectre fréquentiel. l'invention a aussi pour objet un dispositif mettant en oeuvre ce procédé.

Cette invention trouve une application particulièrement intéressante dans les systèmes de transmission sur fibre optique d'un multiplex de porteuses analogiques ou numériques, notamment pour la transmission et la distribution de canaux de télévision en MABLR (Modulation d'Amplitude à Bande Latérale Résiduelle).

### Etats de la technique antérieure

L'utilisation de la technique optique pour la transmission et la distribution de canaux vidéo sous la forme d'un multiplex de porteuses MABLR commence à entrer dans une phase industrielle. Cela a été rendu possible par les récents progrès réalisés sur les sources optiques en matière de linéarité et de RIN (Relative Intensity Noise). Par ailleurs, les amplificateurs optiques à fibre dopée à l'erbium conviennent bien aux signaux analogique car ils sont très linéaires dès que la fréquence de modulation du signal optique dépasse quelques kilohertz. Installés en ligne ou comme amplificateur d'émission, ils permettent d'obtenir, grâce à leur gain élevé et à leur forte puissance de sortie, un budget énergétique suffisant pour à la fois établir de longues portées et répartir l'énergie optique vers plusieurs points de réception au moyen de coupleurs optiques.

Pour les systèmes optiques de transmission et de distribution d'un multiplex de porteuses telles, par exemple, que des porteuses vidéo en MABLR, tout moyen permettant un accroissement du budget énergétique présente un intérêt. En effet, cet accroissement peut être utilisé pour augmenter la portée entre deux amplificateurs de ligne ainsi que le taux de partage de la source optique, ce qui conduit à réaliser une économie de coût.

On peut trouver une description du système MABLR dans l'article de W.I. Way et al. : "Multichannel AM-VSB Television Signal Transmission using an Erbium-doped Optical fiber power amplifier", publiée dans IEEE Photonics Technology Letters, vol. 1, no. 10, 1 Octobre 1989, New York, NY USA.

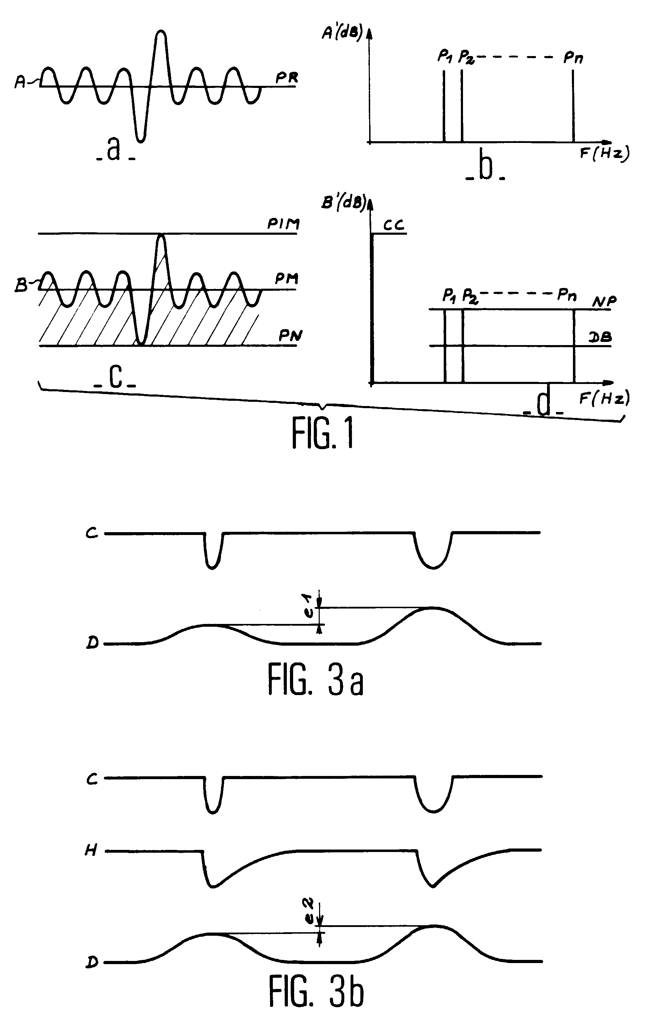

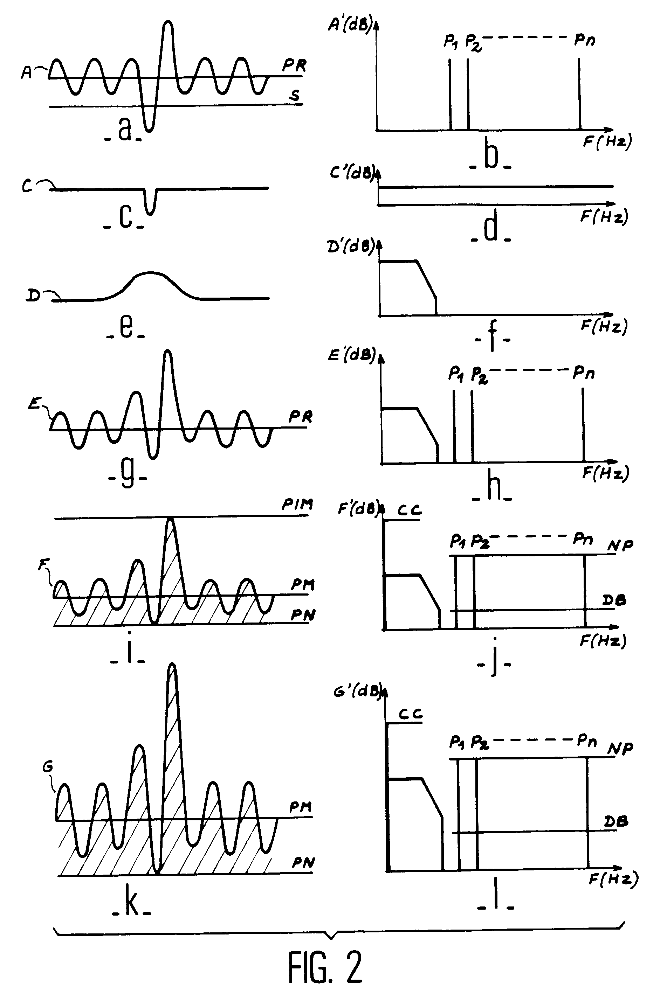

La présente invention a pour but d'augmenter le budget énergétique des systèmes optiques véhiculant un multiplex de porteuses électriques. A cette fin, il est fait observer que le signal électrique correspondant à un multiplex de porteuses présente une faible amplitude pendant un grand pourcentage du temps et une grande amplitude pendant un faible pourcentage du temps. Un tel signal électrique est représenté de manière simplifiée, pour une meilleure clarté graphique, par le signal électrique A, symétrique par rapport à son point de repos PR, de la figure 1a annexée.

On peut trouver une représentation précise correspondant à un multiplex de 42 porteuses sinusoïdales non modulées dans l'article de C.J. MCGRATH intitulé : "Multi-channel AM fiber optic CATV trunks from lab to reality" publié dans NCTA Technical Papers, 1989, page 232.

La figure 1b montre un exemple de spectre fréquentiel A' correspondant au signal A et composé de n porteuses, soit P1 à Pn. Dans cet exemple, et de manière générale pour un multiplex de porteuses, il existe une plage inoccupée entre la fréquence F = 0 et la fréquence de la première porteuse P1.

Le signal optique que l'on obtient, de manière connue, à la sortie d'une source optique modulée en puissance par le signal A, est représenté sur la figure 1c par le signal B dont l'amplitude instantanée oscille autour d'une puissance moyenne PM située à mi-chemin entre une puissance instantanée maximale PIM et la puissance nulle PN. Le signal B est ici représenté à la limite de l'écrêtage, à la fois au voisinage de la puissance instantanée maximale et de la puissance nulle, et il est rappelé que l'écrêtage d'un tel signal engendre de la distorsion d'intermodulation. On remarque, en observant la partie hachurée qui représente l'énergie optique, que le taux de modulation optique est faible pendant un grand pourcentage du temps. Cela se traduit, sur le spectre fréquentiel B', représenté à la figure 1d, correspondant au signal B, par une composante continue CC de valeur élevée en comparaison du niveau NP des porteuses P1 à Pn. Il en résulte à la fois une mauvaise utilisation de l'énergie optique transmise et, après photodétection, une densité spectrale de bruit de grenaille DB, proportionnelle à la puissance optique moyenne reçue, élevée en comparaison du niveau NP des porteuses P1 à Pn, ce qui représente un grave inconvénient.

La présente invention a justement pour objet de remédier à cet inconvénient.

### Exposé de l'invention

L'invention a pour objet de permettre une diminution de la densité spectrale de bruit de grenaille et donc une augmentation du rapport porteuse à bruit à la sortie du récepteur optique.

L'invention propose, à cet effet, un procédé qui consiste, à partir du signal électrique correspondant à un multiplex de porteuses, à produire un signal électrique de dissymétrisation dont le spectre fréquentiel est inclus dans la plage inoccupée située dans la partie basse du spectre fréquentiel dudit multiplex de porteuses électriques, à additionner ce signal électrique de dissymétrisation au signal électrique correspondant audit multiplex préalablement retardé et à moduler en puissance une source optique par le signal électrique dissymétrique ainsi obtenu.

Un avantage de ce procédé réside dans le fait que la densité spectrale de bruit de grenaille est inférieure. Cet avantage se traduit par une augmentation du rapport porteuse à bruit à la sortie du récepteur optique et conduit par conséquent à une amélioration de la sensibilité.

Avantageusement on module en puissance ladite source optique par le signal électrique dissymétrique obtenu, relativement à ses alternances positives et négatives par rapport à son point de repos, avec une polarité de modulation qui fait correspondre des minima, respectivement des maxima, de puissance optique aux alternances de faible amplitude, respectivement de forte amplitude, dudit signal électrique dissymétrique.

Dans le procédé de l'invention, un mode d'obtention d'un signal électrique de dissymétrisation consiste à détecter, sur le signal électrique correspondant au multiplex à transmettre, les amplitudes inférieures, respectivement supérieures, à un seuil situé au-dessous, respectivement au-dessus, de son point de repos, à procéder à un filtrage passe-bande du signal issu de la précédente détection, dans une bande de fréquence incluse dans la plage inoccupée du spectre fréquentiel dudit multiplex et à inverser et amplifier le signal résultant du précédant filtrage.

Une variante avantageuse du mode d'obtention précédent consiste à effectuer les mêmes opérations et, en outre, à maintenir temporairement les valeurs crêtes du signal issu de la détection préalablement au filtrage.

L'invention a aussi pour objet un dispositif pour la mise en oeuvre de ce procédé. Il comprend un moyen pour distribuer sur deux sorties le signal électrique correspondant au multiplex à transmettre, un moyen pour produire un signal électrique de dissymétrisation, un moyen pour retarder le signal électrique correspondant audit multiplex, un moyen pour additionner ce signal électrique retardé audit signal électrique de dissymétrisation et un moyen de conversion électro-optique modulable en puissance.

Dans une réalisation avantageuse de ce dispositif le moyen pour produire un signal électrique de dissymétrisation comprend un détecteur à seuil recevant un signal électrique correspondant au multiplex à transmettre et alimentant un filtre passe-bande relié à l'entrée d'un amplificateur inverseur. Le moyen pour produire un signal électrique de dissymétrisation peut comprendre en outre un moyen pour maintenir temporairement des valeurs crêtes.

Avantageusement le moyen de conversion électro-optique modulable en puissance comprend un amplificateur optique à fibre en sortie.

Un avantage apparaît en effet lorsqu'on utilise un amplificateur optique à fibre à la sortie de la source optique modulable en puissance. Des sources optiques telles qu'une diode laser modulée directement ou qu'un laser fonctionnant en continu suivi d'un modulateur externe délivrent une puissance optique instantanée qui est limitée à une valeur maximale. En revanche, un amplificateur optique à fibre est limité en termes de puissance optique moyenne et il est capable de fournir une puissance optique instantanée très élevée. Il est également à noter que cet avantage se manifeste de la même manière lorsque l'amplificateur optique à fibre est utilisé comme amplificateur de ligne.

### Brève description des dessins

- la figure 1, déjà décrite, montre le principe de la transmission optique d'un multiplex de porteuses électriques selon un procédé connu,
- la figure 2 illustre le principe du procédé de transmission optique d'un multiplex de porteuses électriques selon l'invention,
- les figures 3a et 3b illustrent deux modes de production d'un signal électrique de dissymétrisation,
- la figure 4 est un schéma fonctionnel d'un dispositif pour engendrer un signal optique selon le procédé de transmission de l'invention,
- les figures 5a et 5b représentent deux modes de réalisation d'un moyen pour produire un signal électrique de dissymétisation.

### Exposé détaillé de modes de réalisation

Le principe de l'invention peut être expliqué en liaison avec la figure 2 qui est à comparer avec la figure 1 déjà décrite à propos de l'art antérieur.

On a représenté sur la figure 2 des formes temporelles de signaux électriques : A, C, D et E, et de signaux optiques : F et G, ainsi que les spectres fréquentiels correspondants, respectivement : A', C', D', E', F' et G'. Le signal A, identique au signal A de la figure 1, correspond au multiplex à transmettre composé des porteuses P1 à Pn. Le signal C est produit en détectant les amplitudes du signal A inférieures au seuil S. Il est formé d'impulsions et son spectre C', composé de produits d'intermodulation des porteuses P1 à Pn, est très étendu.

Le signal D est obtenu à partir du signal C par filtrage, inversion et amplification. Le filtrage utilisé ici est un filtrage passe-bas avec une fréquence de coupure inférieure à la fréquence de la première porteuse P1. Ainsi les composantes du spectre D' sont bien distinctes des porteuses P1 à Pn ce qui permet d'additionner le signal D au signal A sans que cela perturbe les porteuses P1 à Pn. Dans le cas où le multiplex à transmettre comprend une ou plusieurs porteuses auxiliaires à basse fréquence, il convient alors de compléter le précédent filtrage passe-bas par un filtrage passe-haut avec une fréquence de coupure supérieure à la fréquence la plus élevée desdites porteuses auxiliaires. Le filtrage appliqué au signal C est alors de type passe-bande. En pratique, même lorsqu'il n'existe pas de porteuses auxiliaires à basse fréquence dans le multiplex à transmettre, le filtrage appliqué sera du type passe-bande, les circuits couramment utilisés comportant des condensateurs de liaison qui provoquent naturellement un filtrage passe-haut. De même que le signal C, le signal D est formé d'impulsions, mais plus larges, consécutivement au filtrage passe-bas. Ce filtrage apporte aussi un retard que l'on n'a pas fait apparaître sur la figure 2 pour une meilleure lisibilité de cette figure.

Le signal D ainsi obtenu est ensuite additionné au signal A, ce dernier étant en pratique préalablement retardé pour compenser le retard apporté au signal D par le filtrage passe-bas, dans le but de produire le signal E qui a pour caractéristique d'être dissymétrique relativement à ses amplitudes positives et négatives par rapport à son point de repos PR. Le spectre E' est la somme des spectres A' et D'.

Le signal E peut maintenant être utilisé pour moduler en puissance une source optique. Du fait de sa dissymétrie, la polarité de modulation n'est pas indifférente alors qu'elle l'était avec un signal symétrique tel que le signal A. En choisissant la polarité de modulation appropriée, on obtient le signal F qui est à comparer au signal B de la figure 1. On remarque que les amplitudes crête-à-crête maximales sont voisines. On remarque également que la puissance optique moyenne PM du signal F est plus faible, ce qui se traduit sur le spectre F' par une composante continue CC inférieure et, par conséquent, une densité spectrale de bruit de grenaille DB également inférieure.

On peut maintenant rappeler qu'il existe en pratique deux sources principales de bruit qui limitent la sensibilité à la réception d'un signal optique. Il s'agit d'une part du bruit de fond des étages d'amplification électrique et d'autre part du bruit de grenaille inhérent au processus quantique de la photodétection. Ce bruit de grenaille détermine la limite ultime de la sensibilité pour une puissance optique reçue donnée. En pratique, le bruit de grenaille domine généralement le bruit de fond des étages d'amplification, soit parce que la puissance optique moyenne reçue est élevée, soit parce qu'on utilise une photodiode à avalanche ou une photodiode sans gain interne précédée d'un préamplificateur optique. Aussi, une diminution de la densité spectrale de bruit de grenaille DB entraîne une augmentation du rapport porteuse à bruit à la sortie du récepteur optique.

Un avantage du procédé illustré par la figure 2, en comparaison du procédé illustré par la figure 1, réside donc dans le fait que la densité spectrale de bruit de grenaille DB est inférieure. Cet avantage se traduit par une augmentation du rapport porteuse à bruit à la sortie du récepteur optique et conduit par conséquent à une amélioration de la sensibilité. Il est à noter que cette amélioration de la sensibilité se manifeste également à l'entrée d'un amplificateur optique installé en amplificateur de ligne.

Un autre avantage apparaît lorsqu'on utilise un amplificateur optique à fibre à la sortie de la source optique modulable en puissance. En effet, des sources optiques telles qu'une diode laser modulée directement ou qu'un laser fonctionnant en continu suivi d'un modulateur externe délivrent une puissance optique instantanée qui est limitée à une valeur maximale. En revanche, un amplificateur optique à fibre est limité en termes de puissance optique moyenne et il est capable de fournir une puissance optique instantanée très élevée. Aussi, lorsqu'une source optique suivie d'un amplificateur optique à fibre est modulée en puissance par le signal E, on obtient en sortie un signal G qui est à comparer au signal B de la figure 1, ces deux signaux ayant la même puissance optique moyenne PM. Il est clair que le signal G a une amplitude de modulation plus élevée, ce qui se traduit sur le spectre G' par un niveau NP supérieur. Il est également à noter que cet avantage se manifeste de la même manière lorsque l'amplificateur optique à fibre est utilisé comme amplificateur de ligne.

A titre d'exemple, lorsque la puissance optique moyenne est égale au quart de la puissance optique instantanée maximale, comme dans le cas de la représentation graphique des signaux F ou G, l'amélioration potentielle de la sensibilité à l'entrée d'un récepteur optique ou d'un amplificateur optique de ligne d'une part et l'augmentation du niveau des porteuses P1 à Pn à la sortie d'un amplificateur optique à fibre d'autre part, sont de 3dB. Cela procure ainsi, pour cet exemple, un accroissement du budget énergétique de transmission qui peut atteindre 6 dB.

On va maintenant expliquer une variante du mode de production d'un signal électrique de dissymétrisation D en relation avec les figures 3a et 3b. On rappelle préalablement que dans l'exemple de signal C de la figure 2, on n'a représenté qu'une impulsion, mais qu'en réalité ce signal est une succession d'impulsions d'amplitudes et de largeurs inégales. Les plages de variation de l'amplitude et de la largeur dépendent de la composition du multiplex à transmettre. Sur la figure 3a, on a représenté un exemple particulier de signal C comprenant deux impulsions d'amplitudes égales et de largeurs inégales. Après filtrage passe-bas , ces deux impulsions sont élargies et leur largeur est fixée par la fréquence de coupure du filtre. La surface de ces impulsions est conservée à un coefficient d'amplification près. Par conséquent l'amplitude d'une impulsion filtrée dépend de sa largeur avant filtrage. C'est pourquoi il existe un écart e₁ sur les amplitudes des deux impulsions du signal D, ce qui présente un inconvénient. En effet, si l'on ajuste le gain de l'amplification qui suit le filtrage pour que la première impulsion du signal D produise une dissymétrisation optimale, l'amplitude de la deuxième impulsion est trop élevée et inversement.

Un moyen pour remédier à cet inconvénient consiste à maintenir temporairement la valeur crête d'une impulsion du signal C, préalablement au filtrage passe-bas, comme illustré sur la figure 3b. Sur cette figure, on a représenté un signal C identique au signal C de la figure 3a et un signal H obtenu à partir du signal C en produisant ici une décroissance exponentielle des impulsions à partir de leur crête avec une constante de temps de valeur élevée devant la durée moyenne des impulsions du signal C. Ce choix résulte du fait qu'en pratique cette opération peut être réalisée très simplement et de manière connue de l'homme de l'art à l'aide d'un élément semi-conducteur, d'une résistance et d'un concensateur. On obtient ainsi, après filtrage passe-bas du signal H, dont les deux impulsions ont des surfaces qui différent peu, un signal D qui présente un écart e₂ sur les amplitudes des deux impulsions plus faible que l'écart e₁.

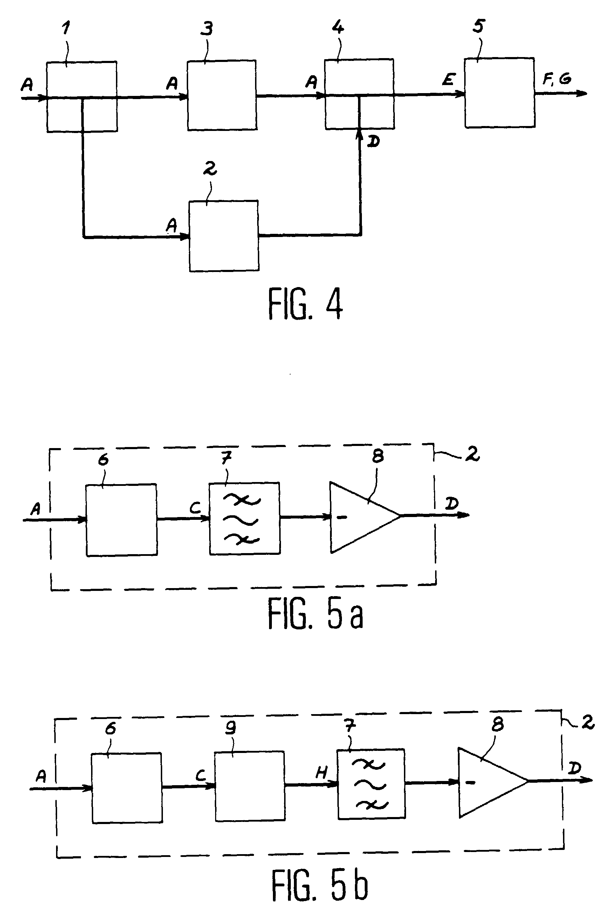

On va maintenant décrire un mode de réalisation d'un dispositif, représenté à la figure 4, mettant en oeuvre le procédé de transmission de l'invention en référence. Ce dispositif comprend un moyen de distribution 1 recevant le signal électrique A correspondant au multiplex à transmettre et délivrant ce signal sur deux sorties. Ce moyen peut être un coupleur passif et dans ce cas les niveaux aux sorties sont inférieurs au niveau à l'entrée ou un distributeur actif qui peut éventuellement présenter un gain d'insertion. Ce dispositif comprend également un moyen 2 produisant un signal électrique de dissymétrisation D, un moyen de retard 3 pouvant par exemple être une ligne coaxiale, un moyen d'addition 4 produisant un signal électrique dissymétrique E et qui, de même que le moyen de distribution 1, peut être passif ou actif. Ce dispositif comprend enfin un moyen de conversion électro-optique modulable en puissance 5 produisant un signal optique F s'il est limité en termes de puissance optique instantanée ou G s'il est limité en termes de puissance optique moyenne.

Les signaux optiques F ou G sont transmis par exemple sur une ligne à fibre optique et ils arrivent sur un photorécepteur. Ce dernier peut être conventionnel et il délivre alors un signal électrique dissymétrique, ou bien il peut comporter un filtre coupe-bande pour éliminer le signal de dissymétrisation et il délivre alors un signal électrique symétrique.

Une première réalisation du moyen 2 pour produire un signal électrique de dissymétrisation D est représentée sur la figure 5a. Elle comprend un détecteur à seuil 6 recevant le signal présent sur l'une des sorties du moyen de distribution 1 et chargé de produire un signal C en détectant les amplitudes inférieures, respectivement supérieures, à un seuil situé au-dessous, respectivement au-dessus d'un point de repos, un filtre passe-bande 7 et un amplificateur inverseur 8.

Une seconde réalisation du moyen 2 pour produire un signal électrique de dissymétrisation D est représentée sur la figure 5b. Elle comprend les mêmes éléments 6, 7 et 8 que la réalisation de la figure 5a avec, en outre, un moyen 9 pour maintenir temporairement les valeurs crêtes du signal C. Un mode de réalisation simple de ce moyen 9 comprend de manière bien connue de l'homme de l'art, un élément semiconducteur, une résistance et un condensateur.

Il est bien entendu que la présente invention n'a été décrite et représentée qu'à titre d'exemple préférentiel et que l'on pourra remplacer ses éléments constitutifs par des éléments équivalents sans, pour autant, sortir du cadre de l'invention.

## Revendications

1. Procédé de transmission optique d'un multiplex de porteuses électriques, caractérisé en ce qu'on produit, à partir du signal électrique correspondant audit multiplex, un signal électrique de dissymétrisation dont le spectre fréquentiel est inclus dans la plage inoccupée située dans le partie basse du spectre fréquentiel dudit multiplex de porteuses électriques, en ce qu'on additionne ce signal électrique de dissymétrisation au signal électrique correspondant audit multiplex préalablement retardé et en ce qu'on module en puissance une source optique par le signal électrique dissymétrique ainsi obtenu.

2. Procédé selon la revendication 1, caractérisé en ce qu'on module en puissance la source optique par le signal électrique dissymétrique, relativement à ses alternances positives et négatives par rapport à son point de repos, avec une polarité de modulation qui fait correspondre des minima, respectivement des maxima, de puissance optique aux alternances de faible amplitude, respectivement de forte amplitude, dudit signal électrique dissymétrique.

3. Procédé selon la revendication 1, caractérisé en ce qu'un signal électrique de dissymétrisation est produit en détectant, sur le signal électrique correspondant au multiplex à transmettre, les amplitudes inférieures, respectivement supérieures, à un seuil situé au-dessous, respectivement au-dessus, de son point de repos.

4. Procédé selon la revendication 3, caractérisé en ce qu'on procède à un filtrage passe-bande du signal issu de la détection, dans une bande de fréquence incluse dans la plage inoccupée du spectre fréquentiel dudit multiplex, en ce que l'on inverse et on amplifie le signal résultant de ce filtrage.

5. Procédé selon la revendication 4, caractérisé en ce que les valeurs crêtes du signal issu de la détection sont temporairement maintenues préalablement au filtrage.

6. Dispositif de transmission optique d'un multiplex de porteuses électriques pour la mise en oeuvre du procédé selon l'une quelconque des revendications 1 à 5, caractérisé en ce qu'il comprend un moyen (1) pour distribuer sur deux sorties le signal électrique correspondant au multiplex à transmettre, un moyen (2) pour produire un signal électrique de dissymétrisation, un moyen (3) pour retarder le signal électrique correspondant audit multiplex, un moyen (4) pour additionner ce signal électrique retardé audit signal électrique de dissymétrisation et un moyen de conversion électro-optique modulable en puissance (5).

7. Dispositif selon la revendication 6, caractérisé en ce que le moyen (2) pour produire un signal électrique de dissymétrisation comprend un détecteur à seuil (6) recevant un signal électrique correspondant au multiplex à transmettre et alimentant un filtre passe-bande (7) relié à l'entrée d'un amplificateur inverseur (8).

8. Dispositif selon la revendication 7, caractérisé en ce que le moyen (2) pour produire un signal électrique de dissymétrisation comprend en outre un moyen (9) pour maintenir temporairement des valeurs crêtes.

9. Dispositif selon la revendication 6, caractérisé en ce que le moyen de conversion électro-optique modulable en puissance (5) comprend un amplificateur optique à fibre en sortie.

## Patentansprüche

1. Verfahren zur optischen Übertragung eines Multiplex bzw. einer Gruppe elektrischer Träger,
**dadurch gekennzeichnet,**
daß man aus dem diesem Multiplex entsprechenden elektrischen Signal ein elektrisches Asymmetrisationssignal herstellt, dessen Frequenzspektrum enthalten ist in dem nichtbesetzten Bereich, der sich im niedrigen bzw. unteren Teil des Frequenzspektrums des besagten Multiplex elektrischer Träger befindet, daß man dieses elektrische Assymmetrisationssignal mit dem elektrischen Signal addiert, das dem besagten, vorher verzögerten Multiplex entspricht, und daß man mit dem so erhaltenen asymmetrischen elektrischen Signal eine Lichtquelle leistungsmoduliert.

2. Verfahren nach Anspruch 1, dadurch gekennzeichnet, daß man die Lichtquelle durch das asymmetrische elektrische Signal entsprechend seiner auf seinen Ruhepunkt bezogenen positiven und negativen Halbperioden mit einer Modulationspolarität leistungsmoduliert, die Lichtleistungsminima beziehungsweise -maxima den Halbperioden mit schwacher Amplitude beziehungsweise starker Amplitude des besagten asymmetrischen elektrischen Signals entsprechen läßt.

3. Verfahren nach Anspruch 1, dadurch gekennzeichnet, daß ein elektrisches Asymmetrisationssignal erzeugt wird, indem man bei dem dem zu übertragenden Multiplex entsprechenden elektrischen Signal die unteren beziehungsweise oberen Amplituden an einer Schwelle detektiert, die sich unter beziehungsweise über seinem Ruhepunkt befindet.

4. Verfahren nach Anspruch 3, dadurch gekennzeichnet, daß man eine Bandpaß-Filtrierung des von der Detektierung stammenden Signals durchführt, in einem Frequenzband, das enthalten ist in dem nichtbesetzten Bereich des Frequenzspektrums des besagten Multiplex, und dadurch, daß man das aus dieser Filtrierung resultierende Signal umkehrt und verstärkt.

5. Verfahren nach Anspruch 4, dadurch gekennzeichnet, daß die Spitzenwerte des aus der Detektierung stammenden Signals vor der Filtrierung temporär festgehalten werden.

6. Vorrichtung zur optischen Übertragung eines Multiplex bzw. einer Gruppe elektrischer Träger für die Anwendung des Verfahrens nach einem der Ansprüche 1 bis 5, dadurch gekennzeichnet, daß sie umfaßt: eine Einrichtung (1), um das dem zu übertragenden Multiplex entsprechende elektrische Signal auf zwei Ausgänge zu verteilen, eine Einrichtung (2) zum Erzeugen eines elektrischen Asymmetrisationssignals, eine Einrichtung (3) zum Verzögern des dem besagten Multiplex entsprechenden elektrischen Signals, eine Einrichtung (4), um dieses verzögerte elektrische Signal mit dem elektrischen Asymmetrisationssignal zu addieren, und eine leistungsmodulierbare elektro-optische Umwandlungseinrichtung.

7. Vorrichtung nach Anspruch 6, dadurch gekennzeichnet, daß die Einrichtung (2) zum Erzeugen eines elektrischen Asymmetrisationssignals einen Schwellendetektor (6) umfaßt, der ein dem zu übertragenden Multiplex entsprechendes elektrisches Signal empfängt und ein Bandpaß-Filter (7) speist, das mit dem Eingang eines invertierenden Verstärkers (8) verbunden ist.

8. Vorrichtung nach Anspruch 7, dadurch gekennzeichnet, daß die Einrichtung (2) zum Erzeugen eines elektrischen Asymmetrisationssignals außerdem eine Einrichtung (9) umfaßt, um Spitzenwerte temporär festzuhalten.

9. Vorrichtung nach Anspruch 6, dadurch gekennzeichnet, daß die leistungsmodulierbare elektro-optische Umwandlungseinrichtung (5) einen optischen Verstärker mit Ausgangsfaser bzw. einer Faser als Ausgang umfaßt.

## Claims

1. Process for the optical transmission of a multiplex of electrical carriers, characterized in that production takes place, from the electrical signal corresponding to said multiplex, of an electrical asymmetrization signal, whose frequency spectrum is included in the unoccupied range located in the lower part of the frequency spectrum of said multiplex of electrical carriers, in that said electrical asymmetrization signal is added to the electrical signal corresponding to said previously delayed multiplex and in that power modulation takes place of an optical source by the thus obtained electrical asymmetrical signal.

2. Process according to claim 1, characterized in that power modulation takes place of the optical source by the electrical asymmetrical signal, relative to positive and negative alternations with respect to its rest point, with a modulation polarity making minima or maxima of the optical power correspond to low or high amplitude alternations of said electrical asymmetrical signal.

3. Process according to claim 1, characterized in that an electrical asymmetrization signal is produced by detecting, on the electrical signal corresponding to the multiplex to be transmitted, the amplitudes below or above a threshold which is below or above its rest point.

4. Process according to claim 3, characterized in that the signal resulting from the detection undergoes band pass filtering in a frequency band included in the unoccupied range of the frequency spectrum of said multiplex and in that the signal resulting from said filtering is inverted and amplified.

5. Process according to claim 4, characterized in that the peak values of the signal resulting from this detection are temporarily maintained prior to filtering.

6. Apparatus for the optical transmission of a multiplex of electrical carriers for performing the process according to any one of the claims 1 to 5, characterized in that it comprises a means (1) for distributing on two outputs the electrical signal corresponding to the multiplex to be transmitted, a means (2) for producing an electrical asymmetrization signal, a means (3) for delaying the electrical signal corresponding to said multiplex, a means (4) for adding said delayed electrical signal to said electrical asymmetrization signal and a power modulatable electrooptical conversion means (5).

7. Apparatus according to claim 6, characterized in that the means (2) for producing an electrical asymmetrization signal comprises a threshold detector (6) receiving an electrical signal corresponding to the multiplex to be transmitted and supplying a band pass filter (7) connected to the input of an inverting amplifier (8).

8. Apparatus according to claim 7, characterized in that the means (2) for producing an electrical asymmetrization signal also comprises a means (9) for temporarily maintaining peak values.

9. Apparatus according to claim 6, characterized in that the power modulatable electrooptical conversion means (5) comprises a fibre optic amplifier at the output.
